# EUROPEAN PATENT SPECIFICATION

(11) **EP 4 094 097 B1**
(45) Date of publication and mention of the grant of the patent: **23.07.2025**
(21) Application number: 21743915.7
(22) Date of filing: 22.01.2021
(51) Int. Cl.: G01S 17/93, G01S 17/00, G01S 17/02, G01S 17/86, G01S 17/88, G01S 7/497, G01S 17/34, G01S 17/89, G01S 17/42, G01S 7/481, G01S 17/58

(54) **ON-CHIP MONITORING AND CALIBRATION CIRCUITS FOR FREQUENCY MODULATED CONTINOUS WAVE LIDAR**
ON-CHIP-ÜBERWACHUNGS- UND KALIBRIERUNGSSCHALTUNGEN FÜR FREQUENZMODULIERTES DAUERSTRICH-LIDAR
CIRCUITS DE SURVEILLANCE ET D'ÉTALONNAGE SUR PUCE DESTINÉS À UN LIDAR À ONDE ENTRETENUE MODULÉE EN FRÉQUENCE

(30) Priority: 23.01.2020 US 202062965094 P; 28.01.2020 US 202062966983 P
(43) Date of publication of application: 30.11.2022
(73) Proprietor: Aurora Operations, Inc., Pittsburgh, PA 15222 (US)
(72) Inventor: SANDBORN, Phillip, Mountain View, CA 94043 (US); LIN, Sen, Mountain View, CA 94043 (US)
(74) Representative: Peterreins Schley
(86) International application number: PCT/US2021/014519
(87) International publication number: WO 2021/150826

(56) References cited:
- WO-A1-2019/217850
- US-A1- 2017 184 450
- US-A1- 2019 391 242
- US-A1- 2020 011 994
- US-B2- 10 261 389

## Description

### TECHNICAL FIELD

This disclosure relates generally to frequency modulated continuous wave (FMCW) light detection and ranging (LiDAR), more particularly, to solid state FMCW LiDAR systems.

### BACKGROUND

A reference interferometer is used by conventional frequency FMCW LiDARs to help characterize and correct for non-linearity in laser chirp. Conventional lidar or optical coherence tomography (OCT) systems rely on a reference interferometer with balanced photodiode to estimate laser frequency indirectly and calibrate any measurement data. In order to ensure accuracy in the phase extraction from a reference interferometer and a balanced photodiode, the reference interferometer typically needs to have long delay lines, or short delay lines and careful bias control - i.e., it would be off chip. Moreover, long delay lines are typically a challenging problem for integrated photonics, due to the high losses incurred in small waveguides. In addition, performance of FMCW lasers may drift on various timescales, over the course of several measurements with temperature or other environmental conditions, or over the course of the lifetime of the FMCW sensor.

Moreover, conventional FMCW LiDAR systems use mechanical moving parts and bulk optical lens elements (i.e., a refractive lens system) to steer the laser beam in two directions. And for many applications (e.g., automotive) are too bulky, costly, and unreliable. US 2017/0184450 A1 discloses an optical circuit comprising: a phased array of solid state waveguides to receive an optical signal and transmit the optical signal as a beamsteered optical signal; a modulator circuit coupled to modulate a bit sequence onto a carrier frequency of the optical signal; and a photodetector to detect a reflection signal of the beamsteered optical signal, and transmit the reflection signal for autocorrelation with the bit sequence to generate a processed signal.

### SUMMARY

According to an aspect of the present invention, there is provided a light detection and ranging (LiDAR) chip of a solid state frequency modulated continuous wave (FMCW) LiDAR system as set out in independent claim 1. Other embodiments are described in the dependent claims.

### BRIEF DESCRIPTION OF THE DRAWINGS

Embodiments of the disclosure have other advantages and features which will be more readily apparent from the following detailed description and the appended claims, when taken in conjunction with the examples in the accompanying drawings, in which:
Figure 1 shows solid-state scanning with a switchable coherent pixel array chip on a LiDAR chip, according to one or more embodiments.
Figure 2 shows a basic structure and signal flow of an on-chip monitoring assembly, according to one or more embodiments.
Figure 3 is a diagram of a crossbar readout scheme for linear arrays of monitoring photodetectors in a multi-channel switchable coherent pixel array with a reduced number of Inputs/Outputs(I/Os), according to one or more embodiments.
Figure 4A is a diagram of a hierarchical readout scheme for monitoring photodetectors in a single channel switchable coherent pixel array with a reduced number of I/Os, according to one or more embodiments.
Figure 4B is a diagram of a hierarchical readout scheme for monitoring photodetectors in a multi-channel switchable coherent pixel array with a reduced number of I/Os, according to one or more embodiments.
Figure 5A is a diagram of a hybrid-coupled interferometer with post-process feedback to a direct laser driver, according to one or more embodiments.
Figure 5B is a diagram of a hybrid-coupled interferometer with post-process feedback to a modulator driver, according to one or more embodiments.
Figure 6 shows a process for laser waveform generation and FMCW calibration, according to one or more embodiments.
Figure 7 depicts a solid state LiDAR system containing an FPA system, according to one or more embodiments.

### DETAILED DESCRIPTION OF THE PREFERRED EMBODIMENTS

A solid state FMCW LiDAR system determines depth information (e.g., distance, velocity, acceleration, for one or more objects) for a field of view of the system. The solid state FMCW LiDAR directly measures range and velocity of an object by directing a frequency modulated, collimated light beam into a local area. The light that is reflected from an object within the local area, Signal, is mixed with a tapped version of the beam, referred to as the local oscillator (LO). The frequency of the resulting radiofrequency (RF) beat signal is proportional to the distance of the object from the solid state FMCW LiDAR system once corrected for the doppler shift that requires an additional measurement. The two measurements, which may or may not be performed at the same time, provide range and velocity information of the target.

The solid state FMCW LiDAR system uses on-chip monitoring and calibration circuits for achieving high-performance solid-state beam steering and laser chirping. The solid state FMCW LiDAR system include a focal plane array (FPA) system. The FPA includes one or more switchable coherent pixel array (SCPAs). The one or more SCPAs may be positioned at a focal plane of a lens system, such that the FPA system can perform solid-state beam steering for a single dimension and/or two dimensions. The direction of the incoming beam is mapped into a discrete position of a focused spot, and vice versa. One challenge for an SCPA is to maintain optimal calibration settings for the switch network to achieve low insertion loss, high extinction ratio and low crosstalk at any time. The solid state FMCW LiDAR system uses an on-chip feedback mechanism to enable *in situ* calibration or real-time closed-loop control of high-performance solid-state beam steering.

The on-chip feedback mechanism facilitates maintaining a high-quality laser chirp by the solid state FMCW LiDAR, which senses range by measuring interference between optical signals from a local path and a target path. By sweeping a frequency of a laser, the interference signal becomes an oscillation with a frequency proportional to target distance. FMCW lasers are modulated to have a linear frequency sweep from lower frequency to higher frequency, and then from higher frequency to lower frequency, in a triangular fashion. Often, lasers tuned in this fashion must be tuned with a particular drive signal or the frequency sweeps can deviate significantly from linear. Linearity deviations cause significant inaccuracies in range and velocity measurements derived using the FMCW LiDAR.

In some embodiments, the solid state FMCW LiDAR system utilizes on-chip monitoring and calibration circuits for solid-state beam steering realized by one or more integrated SCPAs. The solid state FMCW LiDAR system uses on-chip optical power monitoring circuits to enable *in situ* calibration or real-time closed-loop control of the optical switch network. For example, the LiDAR chip includes (i.e., on-chip) an optical switch network, a switchable coherent pixel array (SCPA), and a monitoring assembly. The optical switch network is configured to selectively provide coherent light to one or more of a plurality of output waveguides. The SCPA includes coherent pixels (CPs), and each of the CPs is configured to emit coherent light provided by a corresponding output waveguide of the plurality of output waveguides. The monitoring assembly includes a plurality of photodetectors, and each of the plurality of photodetectors is configured to generate an output signal responsive to a level of light detected from a corresponding output waveguide of the plurality of output waveguides. The optical switch network is calibrated (e.g., by a controller) by adjusting a drive strength of switch drivers for the optical switch network based on output signals from the monitoring assembly.

The one or more SCPAs are placed at a focal plane of a lens system for fast solid-state beam steering and co-axial FMCW LiDAR operation. On-chip optical monitoring circuits with optical couplers and monitoring photodetectors (PD) monitor the optical power at the output ports of an optical switch network. With this design, *in situ* calibration and real-time closed-loop control can be performed without affecting the coherent pixels or interrupting the normal operation of the LiDAR. For large-scale or multi-channel switchable coherent pixel arrays, a crossbar-type or a hierarchical (e.g., a binary tree) connection scheme can be used to read the signal from any arbitrary monitoring PD with significantly reduced number of I/Os and receivers for the monitoring circuits.

In some embodiments, the solid state FMCW LiDAR system utilizes on-chip monitoring and calibration circuits for generating a high-quality laser chirp signal. For example, the LiDAR chip may include (i.e., on-chip) a splitter, an interferometer, an optical switch network, and a SCPA. The splitter is configured to split coherent light into a first portion and a second portion. The coherent light is chirped according to a waveform. The interferometer is configured to generate an in-phase (I) signal and a quadrature(Q) signal using the first portion of the coherent light. The optical switch network is configured to selectively provide the second portion of the coherent light to one or more of a plurality of output waveguides. The SCPA includes coherent pixels (CPs), and each of the CPs is configured to emit coherent light provided by a corresponding output waveguide of the plurality of output waveguides. A controller is configured to identify deviations in frequency of the coherent light based in part on the I and Q signals, and control a shape of the waveform to compensate for the identified deviations. Note that in some embodiments, the LiDAR chip may also include the monitoring assembly as described in the previous paragraph.

The solid state FMCW LiDAR system uses a swept-source laser and a frequency-discrimination interferometer with optical hybrid for laser driver calibration. In some embodiments, a programmable laser driver (current or voltage source) directly drives a tuning laser source to create alternating positive and negative frequency sweeps. In other embodiments, a programmable modulator driver directly drives a modulator to induce positive and negative frequency sweeps on the seed laser beam. This is followed by the interferometer that includes a splitter, which sends light down two paths, one "local" path and one "reference" path, an optical combiner known as an "90-degree optical hybrid," a photoreceiver with multiple photodetectors, and a controller for signal processing. The controller calculates an instantaneous signal phase and laser frequency using the outputs from the optical hybrid. The resulting instantaneous laser frequency is fed back to the drive signal generator to compensate for deviations in laser frequency from linear. In addition, the interferometer and optical hybrid can be used to calibrate for any non-linearity that results from residual error in the predistortion process or from laser/environmental drift. Accordingly, the solid state FMCW LiDAR system performs *in situ* generation of laser driver signals, and *in situ* calibration of residual non-linearity and laser performance drifts.

Note that in some embodiments, both the monitoring assembly for calibration of the optical switch network, and the interferometer with optical hybrid for laser driver calibration can be implemented on the same LiDAR chip. As such the LiDAR chip would be able to not only calibrate the optical switch network but also calibrate the laser driver.

As noted above, conventional LiDAR systems that use an interferometer to help characterize and correct for non-linearity in laser chirps have long delay lines or short delay lines and careful bias control. Long delay lines are problematic for integrated photonics, due to the high losses incurred in small waveguides, and may be off-chip. Likewise careful bias control generally correlates with an increase in complexity of control circuitry. In contrast, the solid state FMCW LiDAR system performs laser frequency measurement using on-chip short delay lines without complex bias controls. Moreover, the solid state FMCW LiDAR system is configured to measure laser frequency and dynamically adjust the drive waveform of the laser to account for changes of the laser characteristics over time or over environmental conditions.

Note that the LiDAR chip can steer the light emitted from the solid state LiDAR system in at least a first angular dimension (e.g., elevation). And the solid state FMCW LiDAR system may include, e.g., a scanning mirror (e.g., moving mirror, polygon mirror, etc.) to steer the light in a different angular dimension (e.g., azimuth). And in some embodiments, optical antennas within the one or more SCPAs are arranged in two-dimensions such that the LiDAR chip can steer the optical beam two-dimensions (e.g., azimuth and elevation). Being able to steer the beam without moving parts may mitigate form factor, cost, and reliability issues found in many conventional mechanically driven LiDAR systems.

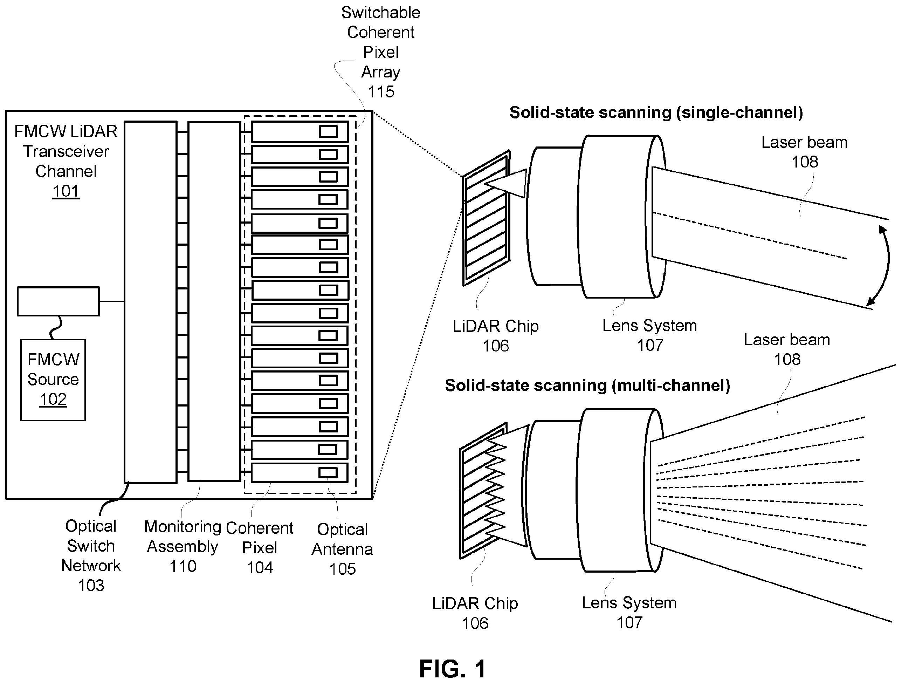

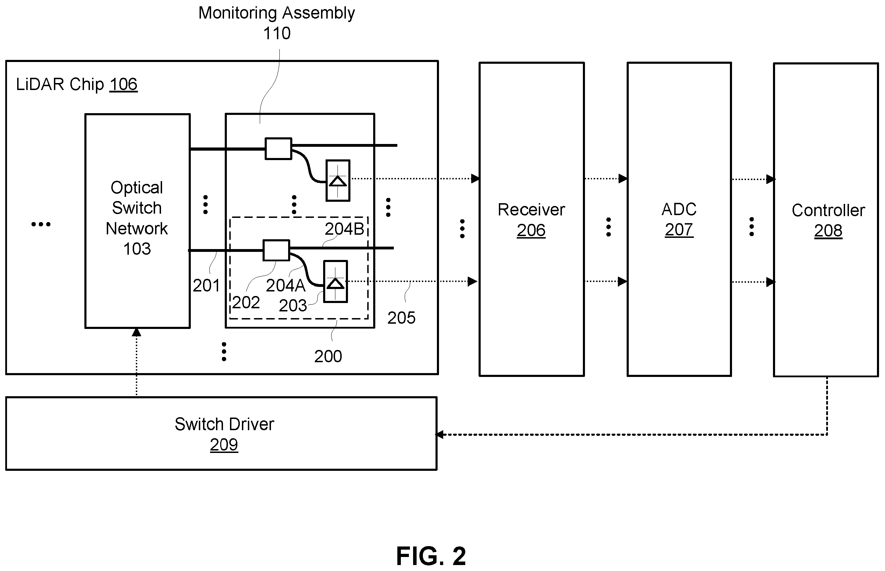

Figure 1 shows solid-state scanning with a switchable coherent pixel array chip on a LiDAR chip 106, according to one or more embodiments. The LiDAR chip 106 is part of a FPA system that is configured to scan a local area. The LiDAR chip 106 is based on photonic integrated circuits (e.g., silicon photonics). The LiDAR chip 106 includes one or more FMCW LiDAR transceiver channels 101. A FMCW LiDAR transceiver channel 101 includes a FMCW light source 102, an optical switch network 103, monitoring assembly 110 and a SCPA 115. As shown, the FMCW light source 102 is integrated directly on the LiDAR chip 106. In other embodiments, the FMCW light source 102 is not part of the LiDAR chip 106 and instead light from the FMCW light source 102 is coupled into the LiDAR chip 106 from an external source. The FMCW light source 102 may be split light between different FMCW LiDAR transceiver channels that are on the LiDAR chip 106, or even on different LiDAR chips. The light can be also amplified by a fiber amplifier or semiconductor amplifier chips. The optical switch network 103 switches the guided light between the output ports and activates the coherent pixel associated with the selected port. The optical switch network 103 is configured to selectively provide coherent light to one or more of a plurality of output waveguides that couple to various coherent pixels of the SCPA 115. The monitoring assembly 110 can be placed anywhere on the chip after the optical switch network 103 or as an integral part of the optical switch network 103. As an example, as shown the monitoring assembly 110 is placed between the optical switch network 103 and the SCPA 104. The monitoring assembly 110 including a plurality of photodetectors. Each of the plurality of photodetectors is configured to generate an output signal responsive to a level of light detected from a corresponding output waveguide of the plurality of output waveguides. The optical switch network 103 is calibrated by adjusting a drive strength of switch drivers for the optical switch network 103 based on output signals from the monitoring assembly 110. Embodiments of the monitoring assembly 110 are described below with regard to FIGs. 2, 3, 4A, and 4B.

The SCPA 115 includes coherent pixels, and each of the coherent pixels is configured to emit coherent light provided by a corresponding output waveguide of the plurality of output waveguides. Each coherent pixel includes an optical antenna 105 for emitting and receiving optical signals and other passive and active optical components such as waveguides, couplers, hybrids, gratings and photodetectors for generating the RF signals. The SCPA 115 is placed at a focal plane of a lens system 107. The lens system 107 includes one or more optical elements (e.g., positive lens, freeform lens, Fresnel lens, etc.) which map a physical location of each coherent pixel, to a unique direction. In some embodiments, the lens system 107 is positioned to collimate the transmitted signals emitted via the plurality of optical antennas 105. The lens system 107 is configured to project a transmitted signal emitted from an optical antenna of the plurality of antennas into a corresponding portion of a field of view of the FPA system, and to provide a reflection of the transmitted signal to the optical antenna. Each optical antenna sends and receives light from a different angle. Therefore by switching to different antennas, a discrete optical beam scanning is achieved. The FPA system scans a laser beam 108 across targets in the field-of-view of the FPA system, and the coherent pixels in the FPA system generate electrical signals which are then digitally processed to create LIDAR point clouds. The lens system 107 produces collimated transmitted signals that scan the transceiver field of view along one or more angular dimensions (e.g., perform a 2-D scan of the local area). Note that by switching the light to different coherent pixels, the LiDAR chip 106 emits or receives collimated laser beam 108 at different angles, enabling discrete solid-state scanning and co-axial optical sensing for a single channel or multiple channels in parallel.

Figure 2 shows a basic structure and signal flow of an on-chip monitoring assembly 110, according to one or more embodiments. The on-chip monitoring assembly 110 monitors coherent light emitted from outputs of the optical switch network 103 The on-chip monitoring assembly 110 includes one or more monitoring circuits 200. A monitoring circuit 200 may include, e.g., an optical coupler 202, a monitoring photodetector (PD) 203, output waveguides 204A and 204B. The optical switch network 103 has as a plurality of output ports. The optical switch network 103 is configured to switch the light from an FMCW source between the output ports. And each output port is coupled to a respective output waveguide (e.g., the output waveguide 201). Additionally, some of the output waveguides 201 can be internal routing waveguides within the optical switch. The monitoring assembly 110 includes a plurality of optical couplers that are configured to tap a portion of the coherent light provided to the plurality of output waveguides, and provide the portion of light to a plurality of photodetectors. In some embodiments, each of the optical couplers has a different corresponding photodetector of the plurality of photodetectors to which the optical coupler provides a tapped portion of the coherent light. For example, the optical coupler 202 taps optical power (i.e., coherent light) from an output waveguide 201 at the output ports of the optical switch network 103, and provides the tapped optical power (i.e., a portion of the coherent light output from the output port) to the monitoring PD 203 via the output waveguide 204A. The optical power is converted to electrical signals via the monitoring PD 203. The optical coupler 202 outputs the rest of the optical power via the output waveguide 204B. The output waveguide 204B provides the light to a next stage (e.g., a coherent pixel) in the FMCW LiDAR Transceiver channel 101.

Electrical signals from the one or more monitoring circuits 200 are then processed via a receiver 206. The receiver may include, e.g., an amplifier, integrator, switches, etc. Data output from the receiver 206 is quantized by an analog-to-digital converter (ADC) 207. The output of the ADC 207 is then processed in a controller 208. The controller 207 may include, e.g., control circuits, computer processor, field-programmable gate array (FPGA), digital signal processor, microcontroller, application specific integrated circuit (ASIC), or some combination thereof. As illustrated the receiver 206, the ADC 207, the controller 208, and the switch driver 209 are separate from the LiDAR chip 106. In other embodiments, some or all of the receiver 206, the ADC 207, the controller 208, and the switch driver 209 may be also be integrated into the LiDAR chip 106. Additionally, while a single receiver 206, and a single ADC 207 are shown, in some embodiments, there may be a plurality of receivers 206 and a corresponding plurality of ADCs. For example there may be a separate receiver 206 and a separate corresponding ADC 207 for each monitoring circuit.

Closed-loop calibration and/or control are done by adjusting a drive strength of switch drivers 209 for the optical switch network 103 based on the outputs of monitoring circuits. The calibration of the optical switch network 103 helps ensure light is passed to one or more target CPs using minimal power, and mitigates light being passed to non-target CPs. Note that the calibration of the optical switch network 103 occurs within the solid state FMCW LiDAR system and no external equipment is needed. For a large-scale or multi-channel switchable coherent pixel array, there could be hundreds of coherent pixels, hundreds of switch ports and therefore hundreds of monitoring PDs. As such, in some instances it may become impractical to assign individual electrical I/O pads/traces to each monitoring PD due to electrical I/O constraints.

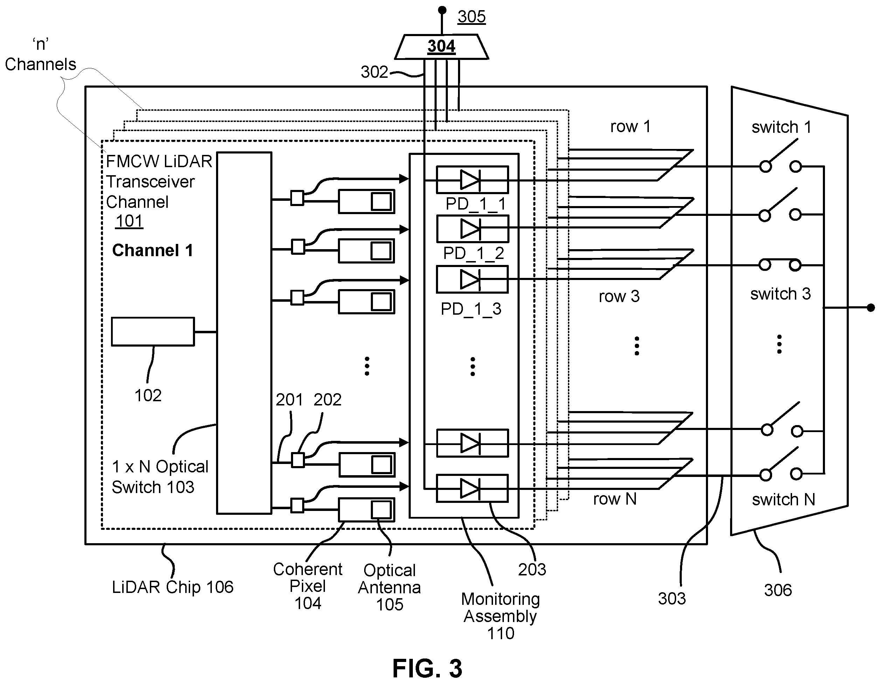

Figure 3 is a diagram of a crossbar readout scheme for linear arrays of monitoring photodetectors in a multi-channel switchable coherent pixel array with a reduced number of Inputs/Outputs(I/Os), according to one or more embodiments. The crossbar-type connection scheme can read signals from any arbitrary monitoring PD 203 while significantly reducing number of electrical I/Os needed for the monitoring circuits. In Figure 3, a FPA system includes the LiDAR chip 106, and the LiDAR chip 106 includes multiple LiDAR transceiver channels 101. The LiDAR transceiver channels 101 can also be subblocks in a larger switch network. The LiDAR chip includes "n" channels and "N" rows of monitoring circuits (and corresponding coherent pixels), where n and N are integers. As such each monitoring PD may be identified using the channel and row. As such, each photodetector of each of the monitoring assemblies has a corresponding row value that ranges from 1 to N and has a corresponding channel value that ranges from 1 to n. For example, a monitoring PD for channel "k" and row "j" is labeled as "PD_k_j."

The crossbar-type connection scheme is independent of the polarity of the monitoring PDs. In this example, cathodes of the monitoring PDs with the same row numbers are connected to form corresponding signal groups (also referred to as nodes) and anodes of monitoring PDs with a same channel value are connected to form corresponding bias groups. For example, as illustrated there are n channels, and cathodes associated with row N are connected to form a corresponding signal group 303. As such there are N signal groups. Similarly, anodes of monitoring PDs with a same channel value are connected to form corresponding signal groups (also referred to as nodes), as such there are n signal groups. For example, as illustrated the anodes of the monitoring PDs of channel 1 are connected to form a corresponding signal group 302.

Any monitoring PD can be selected for readout by selecting the corresponding pixel and row numbers on one or two analog multiplexers (MUX) - e.g., multiplexer(MUX) 304 and MUX 306. The MUX 304 and/or the MUX 306 may be controlled by the controller 208. For example, the controller 208 may configured the MUX 304 and/or the MUX 306 to read out one or more of the monitoring PDs. The MUX 304 and 306 (e.g., switches) can be implemented on the same LiDAR chip 106 or outside the LiDAR chip 106. For example, the output of MUX 306 can be connected to a constant bias voltage 307 to provide a reverse bias for the monitoring PDs and the signal groups (e.g., the signal group 302) can be used for outputting current signals. To read current from PD_k_j, the FPA system opens all switches except switch "j" and process the signal from the kth monitoring PD output. In this example, when switch 3 of the MUX 306 is on and the rest of the switches are off, only the third monitoring PD in each channel is activated. The monitoring PDs outputs can further be multiplexed to reduce the number of receiver channels with the MUX 304. This scheme enables independent optical power monitoring at all the ports of the entire switch network without assigning individual electrical I/O traces/pads to each monitoring PD. To avoid any leakage current from unselected monitoring PDs from other active channels, it is preferred to keep one channel active during monitoring and calibration process, which can be achieved by turning off laser sources or laser amplifiers for the other channels where no monitoring PD is selected. The monitoring and calibration processes for this scheme can happen during power-on or frame transitions.

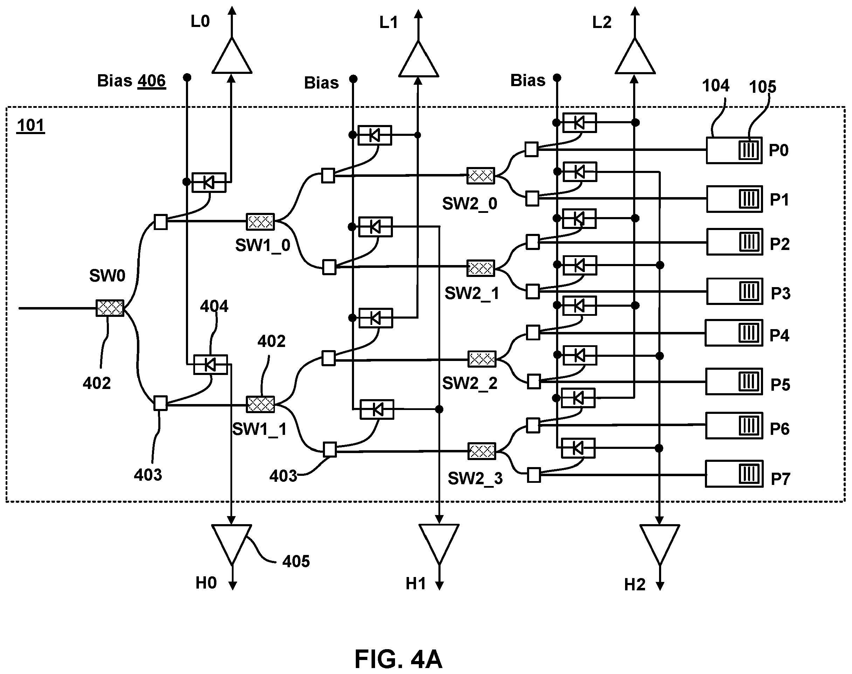

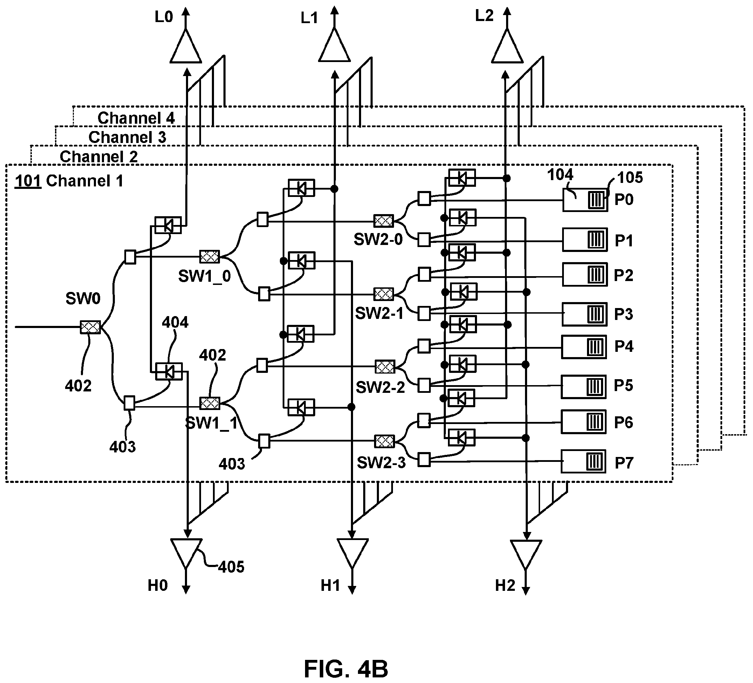

Figures 4A and Figure 4B show a hierarchical readout scheme for monitoring photodetectors that overcomes the limitation of crossbar readout scheme. Figure 4A is a diagram of a hierarchical readout scheme for monitoring photodetectors in a single channel switchable coherent pixel array with a reduced number of I/Os, according to one or more embodiments. In Figure 4A, the optical switch network is in a form of a binary tree. In Figure 4A, a plurality of optical switch cells, a plurality of optical couplers, and a plurality of photodetectors are positioned to form the binary tree that has a plurality of levels. In this example, a 1-to-8 switch tree takes a single input and routes it to one of the eight coherent pixels (P0 to P7) via three stages of 1x2 optical switch cells 402. Each optical switch cell can steer the optical power from the input waveguide into one of the two output waveguides. In this scheme, there are optical couplers 403 and monitoring PDs 404 at both output ports of each switch cell to monitor the power flow and calibrate the switch tree in a hierarchical manner. For a 1-to-8 switch, there is a total of 14 monitoring PDs.

To reduce the number of electrical I/Os, the PD bias 406 and PD output signals may be connected together. For each level in the binary tree, outputs of monitoring PDs with odd indices are connected together to form a first signal and outputs of monitoring PDs with even indices are connected together to form a second signal. For a 1-to-8 switch with 14 hierarchical monitoring PDs, a total number of electrical I/Os and corresponding receivers 405 for optical power monitoring are reduced from 14 to 6. More generally, for a 1-to-2^{N} switch, the number of monitoring I/Os and receivers are reduced from 2^{N+1} to 2N, which is more significant as N grows.

For an example, to calibrate switch settings to direct all the light into coherent pixel P2. The controller 208 starts with reading monitoring signals from receiver L0 and H0 and optimizing control signals for SW0 that maximize L0 reading and minimize H0 reading. The controller (e.g., the controller 208) then moves to the next stage and optimizes control signals for SW1_0 that maximize H1 and minimize L1. For the last stage SW2_1, the controller attempts to maximize L2 and minimize H2. This hierarchical calibration process minimizes leakage and crosstalk from unselected photodetectors. It is also electrically decoupled from the electrically sensitive coherent pixel cells which requires low-noise and high-speed operation for FMCW LiDAR. This enables *in situ* calibration and real-time closed-loop control without affecting the coherent pixels or interrupting the normal operation of the LiDAR.

Figure 4B is a diagram of a hierarchical readout scheme for monitoring photodetectors in a multi-channel switchable coherent pixel array with a reduced number of I/Os, according to one or more embodiments. Figure 4B shows how to scale the scheme of Figure 4A from a single channel to multiple channels. In Figure 4B, the LiDAR chip includes n channels (n = 4 in this case - but may have some other value in other embodiments), and each channel includes a respective optical switch network, a respective SCPA, and a respective monitoring assembly. Each channel includes a plurality of optical switch cells, a plurality of optical couplers, and a plurality of photodetectors that are positioned to form a binary tree having a plurality of levels. In Figure 4B, the output signals from even and odd monitoring PDs at each level are tied together on the LiDAR chip 106 across different channels. The same calibration and closed-loop control can be performed by a controller (e.g., the controller 208) simultaneously for all the channels as long as the same pixel is active at any moment.

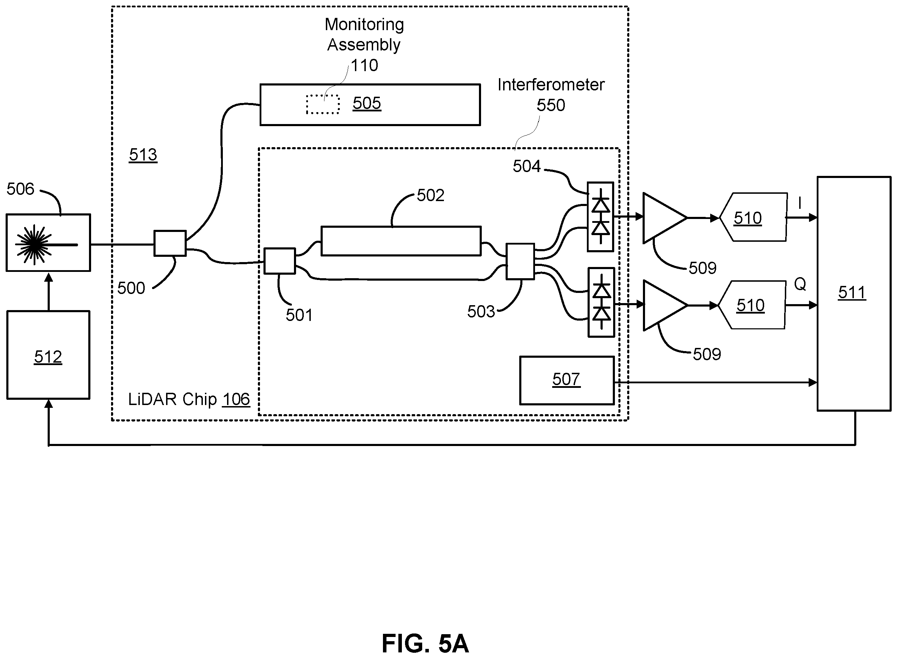

Figure 5A is a diagram of a hybrid-coupled interferometer with post-process feedback to a direct laser driver, according to one or more embodiments. A waveform of a periodic wave (voltage or current) on a laser driver 512 is used to drive a laser 506. In general, the output of the laser 506 is a sequence of up- and down-sweeps of the laser frequency, referred to as up- and down-chirps respectively. This sequence of laser chirps is used for both FMCW probing and in the frequency discrimination process described hereafter. A splitter 500 diverts some laser power to a LiDAR transceiver 505, so that the chirped laser is used as the probing field in an FMCW sensor. The LiDAR transceiver 505 may include one or more FMCW LiDAR transceiver channels 101 that include respective monitoring assemblies 110. As such the hybrid-coupled interferometer with post-process feedback to the direct laser driver shown here may also be combined with features shown in Figures 1, 2, 3, 4A, 4B, or some combination thereof. In some embodiments, the LiDAR transceiver 505 may not include the monitoring assembly 110. The splitter 500 of the present invention is configured to split coherent light into a first portion and a second portion, wherein the coherent light is chirped according to the waveform. An interferometer 550 of the present invention is configured to generate an in-phase (I) signal and a quadrature(Q) signal using the first portion of the coherent light. The splitter 500 also diverts some power to another splitter 501 of the interferometer 550. The splitter 501 divides power between two arms, one of which has a delay arm 502. The delayed arm 502 is delayed with respect to the other arm such that a beat signal is generated when the two arms are combined at an optical hybrid combiner 503. The optical hybrid combiner 503 has four outputs which are configured to be optically phase shifted relative to each other to create 0-degree shifted, 90-degree shifted, 180-degree shifted, and 270-degree shifted optical signals. The 0- and 180-degree shifted signals are measured at one balanced photodetector 504, creating an "I-channel" signal, and the 90- and 270-degree shifted signals are measured at another balanced photodetector, creating a "Q-channel" signal. The I- and Q-channel signals are 90-degree phase-shifted from one another. Each channel is buffered and amplified by a receiver circuit 509, and sampled by an ADC 510. The sampled I and Q signals are used by a controller 511. The controller 511 may be an embodiment of the controller 208. The resulting measured laser frequency is used by the controller 511 to generate a new waveform to compensate for linear deviations in laser frequency. The waveform is generated by the controller 511 and used to drive the laser driver 512. Deviations in interferometer temperature can cause deviations in effective index of the delay arm 502, so a temperature sensor 507 may be used to compensate for this deviation in a calculation performed by the controller 511.

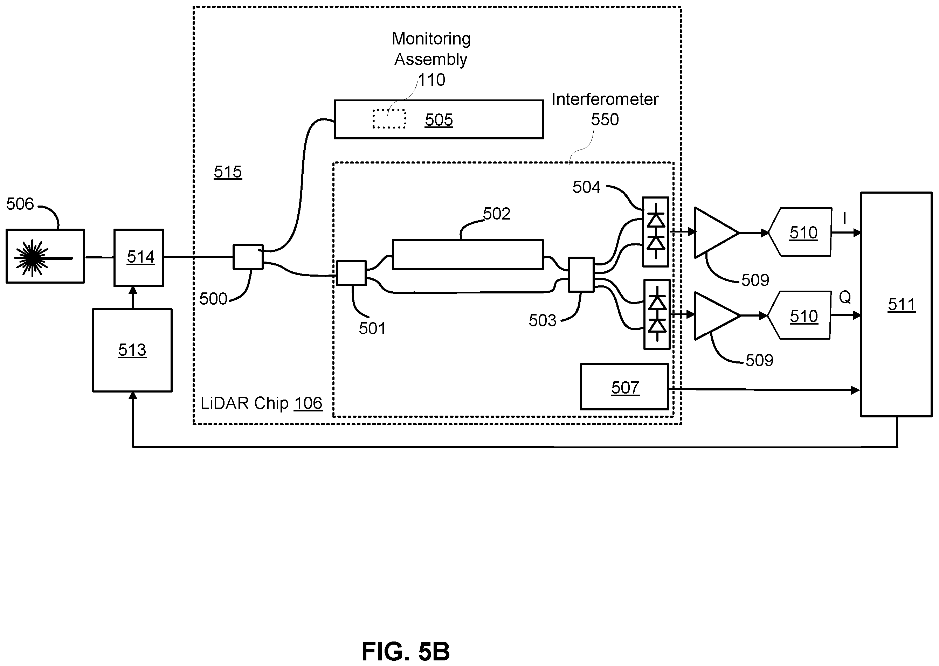

Figure 5B is a diagram of a hybrid-coupled interferometer with post-process feedback to a modulator driver, according to one or more embodiments. Figure 5B is a substantially similar to Figure 5B except: the laser chirp is generated using a seed laser 506 and a laser modulator 514. The laser modulator 514 may be a phase modulator, such as a dual Mach-Zehnder modulator for I/Q modulation, or an intensity modulator. The laser modulator 514 is driven by a voltage or current signal from the modulator driver 513. The chirps generated at the output of the laser modulator 514 are sent through the splitter 500. The components inside the dotted line 515 may be the same blocks as those inside 515 in Figure 5A. In the same fashion as in Figure 5A, the controller 511 generates a control signal that is used as input to the modulator driver 513, which compensates for deviations from linear laser frequency chirps at the output of laser modulator 514.

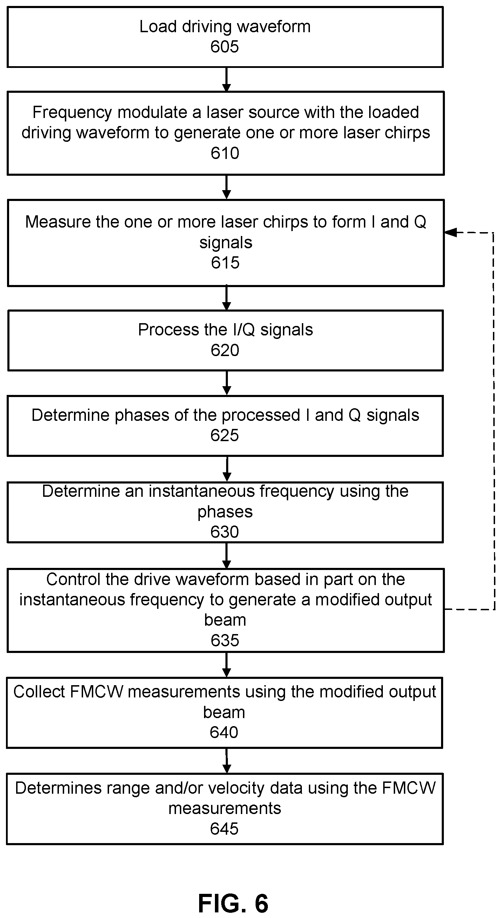

Figure 6 shows a process for laser waveform generation and FMCW calibration, according to one or more embodiments. The calibration process may reduce and remove non-linearity from laser up- and down-chirps. The process shown in Figure 6 may be performed by a controller of a solid state FMCW LiDAR system. Other entities may perform some or all of the steps in Figure 6 in other embodiments. Embodiments may include different and/or additional steps, or perform the steps in different orders.

The solid state FMCW LiDAR system loads 605 a driving waveform. For example, a microcomputer of a LiDAR processing engine of the solid state FMCW LiDAR system may load the driving waveform. The driving waveform may be a generic or previously stored driving waveform.

The solid state FMCW LiDAR system frequency modulates 610 a laser source with the loaded driving waveform. The modulated light forms one or more laser chirps. The frequency modulation may be performed by a laser controller that modulates a K-channel laser array in accordance with instructions from a LiDAR processing engine.

The solid state FMCW LiDAR system measures 615 the one or more laser chirps to form I and Q signals. For example, the solid state FMCW LiDAR system may measure the one or more laser chirps using optical hybrid photodetectors to generate the I/Q signals as shown and described above with regard to, e.g., FIGs. 5A and 5B.

The solid state FMCW LiDAR system processes 620 the I and Q signals. For example, the solid state FMCW LiDAR system may filter and/or sample the I and Q signals. The solid state FMCW LiDAR system may process the I and Q signals using a LiDAR processing engine.

The solid state FMCW LiDAR system determines 625 phases of the processed I and Q signals. The solid state FMCW LiDAR system may determine the phases of the processed I and Q signals using the LiDAR processing engine. Phase may be determined by, e.g., calculating an arc-tangent of a quotient of the processed I and Q signals. This is equivalent to measuring the phase angle of a signal created by adding the I-channel to the Q-channel modified by multiplying the Q-channel by the imaginary number i.

The solid state FMCW LiDAR system determines 630 an instantaneous frequency of the laser using the phases. The instantaneous frequency of the laser may be determined by, e.g., dividing the phase calculated in the previous step by an optical path time delay of a delay arm (e.g., the delay arm 502).

The solid state FMCW LiDAR system controls 635 the drive waveform of the laser source based in part on the instantaneous frequency to generate a modified output beam. The solid state FMCW LiDAR system monitors a strength of deviations in the instantaneous frequency of the laser at different time instances. Based on the strength of the deviations, the solid state FMCW LiDAR system adjusts the driving waveform (e.g., adjusts a shape of the driving waveform) to compensate for slower or faster chirp rates. Such adjustment can be done at once by updating pre-loaded laser model and adapting drive waveform through analytical solutions, or iteratively by tuning the parameterized drive waveform through gradient descent optimization algorithms. The controlled drive waveform is then re-applied to the laser source to generate a modified output beam. Note that steps 615-635 may be iterative and loop one or more times in performing the calibration.

The solid state FMCW LiDAR system collects 640 FMCW measurements using the modified output beam. The solid state FMCW LiDAR system scans (e.g., via the FPA system) the modified output beam across a local area, and measures reflections of the modified output beam from one or more objects in the local area to generate the FMCW measurements.

The solid state FMCW LiDAR system determines 645 range and/or velocity data using the FMCW measurements. The solid state FMCW LiDAR system estimates range and velocity data using the FMCW measurements based on an expected chirp rate of the laser. If residual deviations from linear still exist, they are measured by the same process 605-630 and used to adjust the calculation of range and/ velocity data. This process results in more accurate point clouds.

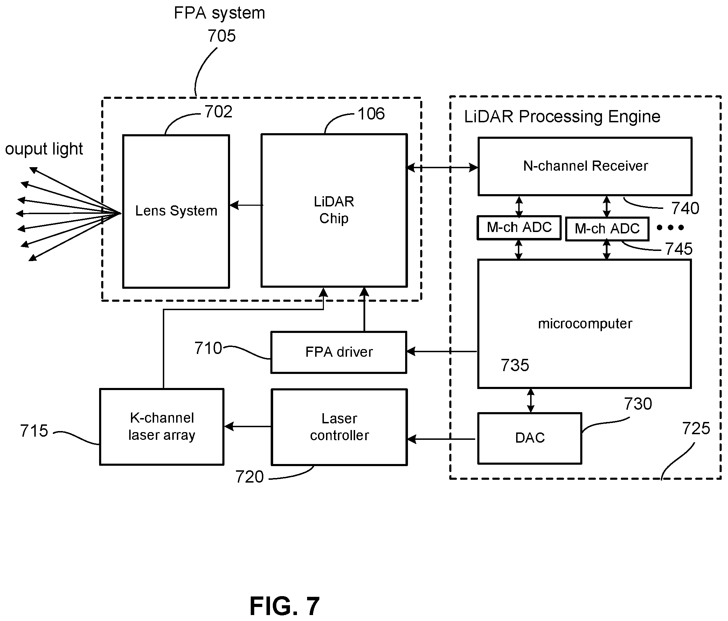

Figure 7 depicts a solid state LiDAR system containing an FPA system 705, according to one or more embodiments. The FPA system 705 may be a reciprocal system. The FPA system 705 includes a lens system 702, and LIDAR chip 106. The LiDAR chip 106 and the FPA system 705 includes some or all of the components and/or some or all of the functionality as described above with regard to Figures 1-6. The CPs in the LiDAR chip 106 are part of one or more SPCAs (e.g., of FMCW LiDAR Transceiver channels 101) that are controlled by a FPA driver 710. One or more individual CPs in the LiDAR chip 106 may be activated to emit and receive light. Light emitted by the LiDAR chip 106 is produced by a K-channel laser array 715. The K-channel laser array 715 is a laser array that has K parallel channels, where K is an integer. The K-channel laser array 715 may be integrated directly with the LiDAR chip 106 or may be a separate module packaged alongside the LiDAR chip 106. The K-channel laser array 715 is controlled by a laser controller 720. In some embodiments, the K-channel laser array 715 is tunable over a range of wavelengths.

The laser controller 720 receives control signals from a LiDAR processing engine 725, via a digital to analog converter 730. The processing also controls the FPA driver 710 and sends and receives data from the LiDAR chip 106.

The LiDAR processing engine 725 includes a microcomputer 735. The microcomputer 735 processes data coming from the FPA system and sends control signals to the FPA system via the FPA driver 710 and laser controller 720. Note that the microcomputer 735 may include the controller 208 and/or the controller 511. The LiDAR processing engine 725 also includes a N-channel receiver 740. Signals are received by the N-channel receiver 740, and the signals are digitized using a set of M-channel analog to digital converters (ADC) 745.

Note that the LiDAR chip 106 can steer the light emitted from the solid state LiDAR system over one or more angular dimensions. In some embodiments, the LiDAR chip 106 is configured to steer the beam only over a first angular dimension (e.g., elevation). The FPA system 705 may include one or more scanning mirrors (not shown) that can steer the optical beam in a second dimension (e.g., orthogonal to the first angular dimension - e.g., azimuth). The scanning mirror receives light from the lens system 702 and directs it into the target area along a particular angular field of view determined by the first angular dimension (controlled by the LiDAR chip 106) and the second angular dimension (controlled by the one or more scanning mirrors). Note that the above example of use of one or more scanning mirrors is in the context of the LiDAR chip 106 being configured to scan only over a first angular dimension. However, in some embodiments, the one or more scanning mirrors may be used with a LiDAR chip 106 that is configured to scan in a plurality of angular dimensions (e.g., azimuth and elevation). For example, with a two dimensional arrangement of the optical antennas (e.g., rectangular grid) signals from the plurality of optical antennas may be scanned in two dimensions within the field of view of the one or more scanning mirrors.

### Additional Configuration Information

The figures and the preceding description relate to preferred embodiments by way of illustration only. It should be noted that from the preceding discussion, alternative embodiments of the structures and methods disclosed herein will be readily recognized as viable alternatives that may be employed without departing from the principles of what is claimed.

Although the detailed description contains many specifics, these should not be construed as limiting the scope of the invention but merely as illustrating different examples. It should be appreciated that the scope of the disclosure includes other embodiments not discussed in detail above. Therefore, the scope of the invention should be determined by the appended claims and their legal equivalents.

Alternate embodiments are implemented in computer hardware, firmware, software, and/or combinations thereof. Implementations can be implemented in a computer program product tangibly embodied in a machine-readable storage device for execution by a programmable processor; and method steps can be performed by a programmable processor executing a program of instructions to perform functions by operating on input data and generating output. Embodiments can be implemented advantageously in one or more computer programs that are executable on a programmable system including at least one programmable processor coupled to receive data and instructions from, and to transmit data and instructions to, a data storage system, at least one input device, and at least one output device. Each computer program can be implemented in a high-level procedural or object-oriented programming language, or in assembly or machine language if desired; and in any case, the language can be a compiled or interpreted language. Suitable processors include, by way of example, both general and special purpose microprocessors. Generally, a processor will receive instructions and data from a read-only memory and/or a random access memory. Generally, a computer will include one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM disks. Any of the foregoing can be supplemented by, or incorporated in, ASICs (application-specific integrated circuits) and other forms of hardware.

## Claims

1. A light detection and ranging, LiDAR, chip (106) of a solid state frequency modulated continuous wave, FMCW, LiDAR system, the LiDAR chip comprising:
an optical switch network (103) on the LiDAR chip, the optical switch network configured to selectively provide coherent light to one or more of a plurality of output waveguides (201);
a switchable coherent pixel array (115), SCPA, on the LiDAR chip, the SCPA including coherent pixels (104), CPs, and each of the CPs configured to emit coherent light provided by a corresponding output waveguide of the plurality of output waveguides;
a monitoring assembly (110) that is on the LiDAR chip, the monitoring assembly including a plurality of photodetectors (203), and each of the plurality of photodetectors configured to generate an output signal (205) responsive to a level of light detected from a corresponding output waveguide of the plurality of output waveguides;
a first splitter (500) on the LiDAR chip, the first splitter configured to split coherent light into a first portion and a second portion, wherein the coherent light is chirped according to a waveform and the second portion of coherent light is the coherent light that the optical switch network selectively provides to the one or more of the plurality of output waveguides; and
an interferometer (550) on the LiDAR chip, the interferometer configured to generate an in- phase, I, signal and a quadrature, Q, signal using the first portion of the coherent light, wherein a shape of the waveform is controlled based in part on the I and Q signals in order to compensate for deviations in a laser frequency,
wherein the optical switch network (103) is calibrated by adjusting a drive strength of switch drivers for the optical switch network based on output signals from the monitoring assembly.

2. The LiDAR chip of claim 1, wherein the monitoring assembly comprises:
a plurality of optical couplers (202; 403) that are configured to tap a portion of the coherent light provided to the plurality of output waveguides, and provide the portion of light to the plurality of photodetectors.

3. The LiDAR chip of claim 2, wherein each of the optical couplers has a corresponding photodetector of the plurality of photodetectors to which the optical coupler provides a tapped portion of the coherent light.

4. The LiDAR chip of claim 1, wherein,
the LiDAR chip includes n channels, and each channel includes a respective optical switch network, a respective SCPA that includes N coherent pixels, and a respective monitoring assembly,
the optical switch network, the SCPA, and the monitoring assembly are part of a first channel, and n and N are integers, and
each photodetector of each of the monitoring assemblies has a corresponding row value that ranges from 1 to N and has a corresponding channel value that ranges from 1 to n.

5. The LiDAR chip of claim 4, wherein first electrodes of photodetectors having a same channel value are coupled together to form respective first nodes, such that there are n first nodes.

6. The LiDAR chip of claim 5, wherein second electrodes of photodetectors having a same row value and different channel values are coupled together to form respective second nodes, such that there are N second nodes.

7. The LiDAR chip of claim 6, wherein the first electrodes are anodes, and the second electrodes are cathodes.

8. The LiDAR chip of claim 6, wherein the n first nodes are electrically coupled to a first switch, and the N second nodes are electrically coupled to a second switch, and the first switch and the second switch are configured to selectively read out any photodetector of any of the monitoring assemblies.

9. The LiDAR chip of claim 3, further comprising a plurality of optical switch cells, and the plurality of optical switch cells, the plurality of optical couplers, and the plurality of photodetectors are positioned to form a binary tree having a plurality of levels.

10. The LiDAR chip of claim 9, wherein for a first level of the plurality of levels, outputs of the photodetectors with odd indices are connected together to form a first node that is coupled to a first receiver, and outputs of the photodetectors with even indices are connected together to form a second node that is coupled to a second receiver;
for a second level of the plurality of levels, outputs of the photodetectors with odd indices are connected together to form a third node that is coupled to a third receiver, and outputs of the photodetectors with even indices are connected together to form a fourth node that is coupled to a fourth receiver.

11. The LiDAR chip of claim 10, wherein, the LiDAR chip includes n channels, and each channel includes a respective optical switch network, a respective SCPA, and a respective monitoring assembly, the optical switch network, the SCPA, and the monitoring assembly are part of a first channel, and n is an integer, and each channel includes a plurality of optical switch cells, a plurality of optical couplers, and a plurality of photodetectors that are positioned to form a binary tree having a plurality of levels; and for each of the n channels, outputs of the photodetectors, at a same level of the plurality of levels, that have odd indices are connected to the first receiver, and that have even indices are connected to the second receiver.

12. The LiDAR chip of any one of the preceding claims, wherein the optical switch network (103) is configured to selectively provide the second portion of the coherent light to the one or more of a plurality of output waveguides.

13. The LiDAR chip of claim 12, further comprising:
a temperature sensor (507) configured to monitor a temperature of a delay arm of the interferometer, wherein the controller uses the monitored temperature to compensate for temperature induced deviations in refractive index of the delay arm.

14. The LiDAR chip of claim 12, wherein the interferometer comprises:
a second splitter (501) configured to split the first portion of coherent light into a first arm and a second arm (502), wherein the second arm introduces delay;
an optical hybrid combiner (503) configured to receive light output from the first arm and the second arm, and output light that is optically phase shifted relative to each other across a first output, a second output, a third output, and a fourth output;
a first balanced photodetector (504) configured to generate the I signal using the first output and the third output; and
a second balanced photodetector configured to generate the Q signal using the second output and the fourth output.

15. The LiDAR chip of claim 12, wherein the coherent light is generated using a seed laser and a laser modulator (514), and the laser modular is driven by a modulator driver (513), and the controller is configured to control the shape of the waveform by controlling the modulator driver.

## Patentansprüche

1. Lichterfassungs- und Abstandsmessungs(*light detection and ranging -* LiDAR)-Chip (106) eines mit Festkörperlaser arbeitenden frequenzmodulierten Dauerstrich(*frequency modulated continuous wave* - FMCW)-LiDAR-Systems, wobei der LiDAR-Chip Folgendes umfasst:
ein optisches Schaltnetz (103) auf dem LiDAR-Chip, wobei das optische Schaltnetz dazu ausgestaltet ist, kohärentes Licht selektiv einem oder mehreren einer Mehrzahl von Ausgangswellenleitern (201) bereitzustellen;
eine schaltbare kohärente Pixelanordnung (115), *switchable coherent pixel array -* SCPA, auf dem LiDAR-Chip, wobei die SCPA kohärente Pixel (104), *coherent pixels -* CPs, umfasst und jedes der CPs dazu ausgestaltet ist, kohärentes Licht zu emittieren, das durch einen entsprechenden Ausgangswellenleiter der Mehrzahl von Ausgangswellenleitern bereitgestellt wird;
eine Überwachungsanordnung (110), die auf dem LiDAR-Chip befindlich ist, wobei die Überwachungsanordnung eine Mehrzahl von Photodetektoren (203) umfasst und jeder der Mehrzahl von Photodetektoren dazu ausgestaltet ist, als Reaktion auf eine Lichtmenge, die als von einem entsprechenden Ausgangswellenleiter der Mehrzahl von Ausgangswellenleitern ausgehend erfasst wird, ein Ausgangssignal (205) zu erzeugen;
einen ersten Splitter (500) auf dem LiDAR-Chip, wobei der erste Splitter dazu ausgestaltet ist, kohärentes Licht in eine erste Teilmenge und eine zweite Teilmenge zu teilen, wobei das kohärente Licht gemäß einer Wellenform gechirpt wird und die zweite Teilmenge von kohärentem Licht das kohärente Licht ist, welches das optische Schaltnetz selektiv dem einen oder den mehreren der Mehrzahl von Ausgangswellenleitern bereitstellt; und
ein Interferometer (550) auf dem LiDAR-Chip, wobei das Interferometer dazu ausgestaltet ist, unter Verwendung der ersten Teilmenge des kohärenten Lichts ein Ein-Phasen(*in-phase* - I)-Signal und ein Quadratur(*quadrature* - Q)-Signal zu erzeugen, wobei eine Form der Wellenform zum Teil basierend auf dem I- und dem Q-Signal gesteuert wird, um Abweichungen einer Laserfrequenz auszugleichen,
wobei das optische Schaltnetz (103) durch Anpassen einer Treiberstärke von Schaltertreibern für das optische Schaltnetz basierend auf von der Überwachungsanordnung ausgehenden Ausgangssignalen kalibriert wird.

2. LiDAR-Chip nach Anspruch 1, wobei die Überwachungsanordnung Folgendes umfasst:
eine Mehrzahl von Optokopplern (202; 403), die dazu ausgestaltet sind, eine Teilmenge des kohärenten Lichts, das der Mehrzahl von Ausgangswellenleitern bereitgestellt wird, abzuziehen und die Teilmenge von Licht der Mehrzahl von Photodetektoren bereitzustellen.

3. LiDAR-Chip nach Anspruch 2, wobei jeder der Optokoppler einen entsprechenden Photodetektor der Mehrzahl von Photodetektoren aufweist, dem der Optokoppler eine abgezogene Teilmenge des kohärenten Lichts bereitstellt.

4. LiDAR-Chip nach Anspruch 1, wobei
der LiDAR-Chip n Kanäle umfasst und jeder Kanal ein jeweiliges optisches Schaltnetz, eine jeweilige SCPA, die N kohärente Pixel umfasst, und eine jeweilige Überwachungsanordnung umfasst,
das optische Schaltnetz, die SCPA und die Überwachungsanordnung Teil eines ersten Kanals sind und n und N ganze Zahlen sind und
jeder Photodetektor jeder der Überwachungsanordnungen einen entsprechenden Zeilenwert, der im Bereich von 1 bis N liegt, aufweist und einen entsprechenden Kanalwert, der im Bereich von 1 bis n liegt, aufweist.

5. LiDAR-Chip nach Anspruch 4, wobei erste Elektroden von Photodetektoren, die denselben Kanalwert aufweisen, zusammengekoppelt sind, um jeweilige erste Knoten auszubilden, sodass es n erste Knoten gibt.

6. LiDAR-Chip nach Anspruch 5, wobei zweite Elektroden von Photodetektoren, die denselben Zeilenwert und unterschiedliche Kanalwerte aufweisen, zusammengekoppelt sind, um jeweilige zweite Knoten auszubilden, sodass es N zweite Knoten gibt.

7. LiDAR-Chip nach Anspruch 6, wobei die ersten Elektroden Anoden sind und die zweiten Elektroden Kathoden sind.

8. LiDAR-Chip nach Anspruch 6, wobei die n ersten Knoten mit einem ersten Schalter elektrisch gekoppelt sind und die N zweiten Knoten mit einem zweiten Schalter elektrisch gekoppelt sind und der erste Schalter und der zweite Schalter dazu ausgestaltet sind, selektiv einen jeden Photodetektor einer jeden der Überwachungsanordnungen auszulesen.

9. LiDAR-Chip nach Anspruch 3, der ferner eine Mehrzahl optischer Schaltzellen umfasst, wobei die Mehrzahl optischer Schaltzellen, die Mehrzahl von Optokopplern und die Mehrzahl von Photodetektoren so angeordnet sind, dass sie einen Binärbaum ausbilden, der eine Mehrzahl von Ebenen aufweist.

10. LiDAR-Chip nach Anspruch 9, wobei für eine erste Ebene der Mehrzahl von Ebenen Ausgänge der Photodetektoren mit ungeraden Indizes miteinander verbunden sind, um einen ersten Knoten auszubilden, der mit einem ersten Empfänger gekoppelt ist, und Ausgänge der Photodetektoren mit geraden Indizes miteinander verbunden sind, um einen zweiten Knoten auszubilden, der mit einem zweiten Empfänger gekoppelt ist;
für eine zweite Ebene der Mehrzahl von Ebenen Ausgänge der Photodetektoren mit ungeraden Indizes miteinander verbunden sind, um einen dritten Knoten auszubilden, der mit einem dritten Empfänger gekoppelt ist, und Ausgänge der Photodetektoren mit geraden Indizes miteinander verbunden sind, um einen vierten Knoten auszubilden, der mit einem vierten Empfänger gekoppelt ist.

11. LiDAR-Chip nach Anspruch 10, wobei der LiDAR-Chip n Kanäle umfasst und jeder Kanal ein jeweiliges optisches Schaltnetz, eine jeweilige SCPA und eine jeweilige Überwachungsanordnung umfasst, das optische Schaltnetz, die SCPA und die Überwachungsanordnung Teil eines ersten Kanals sind und n eine ganze Zahl ist und jeder Kanal eine Mehrzahl optischer Schaltzellen, eine Mehrzahl von Optokopplern und eine Mehrzahl von Photodetektoren umfasst, die so angeordnet sind, dass sie einen Binärbaum ausbilden, der eine Mehrzahl von Ebenen aufweist; und
für jeden der n Kanäle Ausgänge der Photodetektoren auf derselben Ebene der Mehrzahl von Ebenen, die ungerade Indizes aufweisen, mit dem ersten Empfänger verbunden sind, und die gerade Indizes aufweisen, mit dem zweiten Empfänger verbunden sind.

12. LiDAR-Chip nach einem der vorangehenden Ansprüche, wobei das optische Schaltnetz (103) dazu ausgestaltet ist, die zweite Teilmenge des kohärenten Lichts selektiv dem einen oder den mehreren einer Mehrzahl von Ausgangswellenleitern bereitzustellen.

13. LiDAR-Chip nach Anspruch 12, ferner umfassend:
einen Temperatursensor (507), der dazu ausgestaltet ist, eine Temperatur eines Verzögerungsarms des Interferometers zu überwachen, wobei die Steuerung die überwachte Temperatur dazu verwendet, temperaturbedingte Abweichungen des Brechungsindex des Verzögerungsarms auszugleichen.

14. LiDAR-Chip nach Anspruch 12, wobei das Interferometer Folgendes umfasst:
einen zweiten Splitter (501), der dazu ausgestaltet ist, die erste Teilmenge von kohärentem Licht in einen ersten Arm und einen zweiten Arm (502) hinein zu teilen, wobei der zweite Arm eine Verzögerung einbringt;
einen optischen hybriden Kombinator (503), der dazu ausgestaltet ist, Licht zu empfangen, das von dem ersten Arm und dem zweiten Arm ausgegeben wird, und Licht, das optisch zueinander phasenverschoben ist, über einen ersten Ausgang, einen zweiten Ausgang, einen dritten Ausgang und einen vierten Ausgang auszugeben;
einen ersten symmetrischen Photodetektor (504), der dazu ausgestaltet ist, unter Verwendung des ersten Ausgangs und des dritten Ausgangs das I-Signal zu erzeugen; und
einen zweiten symmetrischen Photodetektor, der dazu ausgestaltet ist, unter Verwendung des zweiten Ausgangs und des vierten Ausgangs das Q-Signal zu erzeugen.

15. LiDAR-Chip nach Anspruch 12, wobei das kohärente Licht unter Verwendung eines Anregungslasers und eines Lasermodulators (514) erzeugt wird und der Lasermodulator durch einen Modulatortreiber (513) angetrieben wird und die Steuerung dazu ausgestaltet ist, die Form der Wellenform durch Steuern des Modulatortreibers zu steuern.

## Revendications

1. Puce de détection et de télémétrie par laser, LiDAR (106) d'un système LiDAR à onde entretenue modulée en fréquence, FMCW, à semi-conducteurs, la puce LiDAR comprenant :
un réseau de commutateurs optiques (103) sur la puce LiDAR, le réseau de commutateurs optiques étant configuré pour fournir sélectivement une lumière cohérente à un ou plusieurs guides d'ondes de sortie d'une pluralité de guides d'ondes de sortie (201) ;
un réseau commutable de pixels cohérents (115), SCPA, sur la puce LiDAR, le SCPA comprenant des pixels cohérents (104), CP, et chacun des CP étant configuré pour émettre une lumière cohérente fournie par un guide d'ondes de sortie correspondant de la pluralité de guides d'ondes de sortie ;
un ensemble de surveillance (110) qui est sur la puce LiDAR, l'ensemble de surveillance comprenant une pluralité de photodétecteurs (203), et chacun de la pluralité de photodétecteurs étant configuré pour générer un signal de sortie (205) en réponse à un niveau de lumière détecté à partir d'un guide d'ondes de sortie correspondant de la pluralité de guides d'ondes de sortie ;
un premier diviseur (500) sur la puce LiDAR, le premier diviseur étant configuré pour diviser la lumière cohérente en une première partie et une seconde partie, la lumière cohérente étant modulée en fréquence selon une forme d'onde et la seconde partie de lumière cohérente étant la lumière cohérente que le réseau de commutateurs optiques fournit sélectivement au ou aux guides d'ondes de sortie de la pluralité de guides d'ondes de sortie ; et
un interféromètre (550) sur la puce LiDAR, l'interféromètre étant configuré pour générer un signal en phase, I, et un signal en quadrature, Q, en utilisant la première partie de la lumière cohérente, une forme de la forme d'onde étant commandée en partie sur la base des signaux I et Q afin de compenser les écarts de fréquence laser, le réseau de commutateurs optiques (103) étant étalonné par l'ajustement d'une intensité d'entraînement des pilotes de commutateurs pour le réseau de commutateurs optiques sur la base des signaux de sortie de l'ensemble de surveillance.

2. Puce LiDAR selon la revendication 1, l'ensemble de surveillance comprenant :
une pluralité de coupleurs optiques (202 ; 403) qui sont configurés pour prélever une partie de la lumière cohérente fournie à la pluralité de guides d'ondes de sortie, et fournir la partie de lumière à la pluralité de photodétecteurs.

3. Puce LiDAR selon la revendication 2, chacun des coupleurs optiques ayant un photodétecteur correspondant de la pluralité de photodétecteurs auquel le coupleur optique fournit une partie prélevée de la lumière cohérente.

4. Puce LiDAR selon la revendication 1,
la puce LiDAR comprenant n canaux, et chaque canal comprenant un réseau de commutateurs optiques respectif, un SCPA respectif qui comprend N pixels cohérents, et un ensemble de surveillance respectif,
le réseau de commutateurs optiques, le SCPA, et l'ensemble de surveillance faisant partie d'un premier canal, et n et N étant des entiers, et
chaque photodétecteur de chacun des ensembles de surveillance ayant une valeur de ligne correspondante dans la plage de 1 à N et ayant une valeur de canal correspondante dans la plage de 1 à n.

5. Puce LiDAR selon la revendication 4, des premières électrodes des photodétecteurs qui ont une même valeur de canal étant couplées ensemble pour former des premiers nœuds respectifs, de sorte qu'il y a n premiers nœuds.

6. Puce LiDAR selon la revendication 5, des secondes électrodes des photodétecteurs qui ont une même valeur de ligne et des valeurs de canal différentes étant couplées ensemble pour former des deuxièmes nœuds respectifs, de sorte qu'il y a N deuxièmes nœuds.

7. Puce LiDAR selon la revendication 6, les premières électrodes étant des anodes, et les secondes électrodes étant des cathodes.

8. Puce LiDAR selon la revendication 6, les n premiers nœuds étant couplés électriquement à un premier commutateur, et les N deuxièmes nœuds étant couplés électriquement à un second commutateur, et le premier commutateur et le second commutateur étant configurés pour lire sélectivement tout photodétecteur de l'un quelconque des ensembles de surveillance.

9. Puce LiDAR selon la revendication 3, comprenant en outre une pluralité de cellules de commutateurs optiques, et la pluralité de cellules de commutateurs optiques, la pluralité de coupleurs optiques, et la pluralité de photodétecteurs étant positionnés pour former un arbre binaire ayant une pluralité de niveaux.

10. Puce LiDAR selon la revendication 9, pour un premier niveau de la pluralité de niveaux, des sorties des photodétecteurs avec des indices impairs étant connectées ensemble pour former un premier nœud qui est couplé à un premier récepteur, et des sorties des photodétecteurs avec des indices pairs étant connectées ensemble pour former un second nœud qui est couplé à un second récepteur ;
pour un second niveau de la pluralité de niveaux, des sorties des photodétecteurs avec des indices impairs étant connectées ensemble pour former un troisième nœud qui est couplé à un troisième récepteur, et des sorties des photodétecteurs avec des indices pairs étant connectées ensemble pour former un quatrième nœud qui est couplé à un quatrième récepteur.

11. Puce LiDAR selon la revendication 10, la puce LiDAR comprenant n canaux, et chaque canal comprenant un réseau de commutateurs optiques respectif, un SCPA respectif, et un ensemble de surveillance respectif, le réseau de commutateurs optiques, le SCPA, et l'ensemble de surveillance faisant partie d'un premier canal, et n étant un entier, et chaque canal comprenant une pluralité de cellules de commutateurs optiques, une pluralité de coupleurs optiques, et une pluralité de photodétecteurs qui sont positionnés pour former un arbre binaire ayant une pluralité de niveaux ; et
pour chacun des n canaux, des sorties des photodétecteurs, à un même niveau de la pluralité de niveaux, qui ont des indices impairs étant connectées au premier récepteur, et qui ont des indices pairs étant connectées au second récepteur.

12. Puce LiDAR selon l'une quelconque des revendications précédentes, le réseau de commutateurs optiques (103) étant configuré pour fournir sélectivement la seconde partie de la lumière cohérente au ou aux guides d'ondes de sortie d'une pluralité de guides d'ondes de sortie.

13. Puce LiDAR selon la revendication 12, comprenant en outre :
un capteur de température (507) configuré pour surveiller une température d'un bras de retard de l'interféromètre, le dispositif de commande utilisant la température surveillée pour compenser des écarts d'indice de réfraction induits par la température du bras de retard.

14. Puce LiDAR selon la revendication 12, l'interféromètre comprenant :
un second diviseur (501) configuré pour diviser la première partie de lumière cohérente en un premier bras et un second bras (502), le second bras introduisant un retard ;
un combineur hybride optique (503) configuré pour recevoir une sortie de lumière à partir du premier bras et du second bras, et émettre une lumière qui est décalée en phase optiquement l'une par rapport à l'autre à travers une première sortie, une deuxième sortie, une troisième sortie, et une quatrième sortie ;
un premier photodétecteur équilibré (504) configuré pour générer le signal I en utilisant la première sortie et la troisième sortie ; et
un second photodétecteur équilibré configuré pour générer le signal Q en utilisant la deuxième sortie et la quatrième sortie.

15. Puce LiDAR selon la revendication 12, la lumière cohérente étant générée en utilisant un laser source et un modulateur laser (514), et le modulateur laser étant entraîné par un pilote de modulateur (513), et le dispositif de commande étant configuré pour commander la forme de la forme d'onde en commandant le pilote de modulateur.
